# EUROPEAN PATENT APPLICATION

(11) **EP 4 219 146 A1**
(43) Date of publication of application: **02.08.2023**
(21) Application number: 22212810.0
(22) Date of filing: 12.12.2022
(51) Int. Cl.: B32B 15/01, C21D 6/00, C21D 9/08, C21D 9/50, C22C 38/00, C22C 38/02, C22C 38/06, C22C 38/44, C22C 38/46, C22C 38/48, C22C 38/50, C22C 38/58

(54) **CLAD STEEL-WELDED STEEL PIPE AND METHOD FOR PRODUCING THE SAME**

(30) Priority: 01.02.2022 JP 2022014186
(71) Applicant: Japan Steel Works M&E, Inc., Hokkaido 051-8505 (JP)
(72) Inventor: Honma, Yuta, Muroran-shi, Hokkaido (JP); Madarame, Hirokazu, Muroran-shi, Hokkaido (JP); Hashi, Kunihiko, Muroran-shi, Hokkaido (JP); Kawamura, Takashi, Muroran-shi, Hokkaido (JP); Takimoto, Shin, Muroran-shi, Hokkaido (JP)
(74) Representative: Grünecker Patent- und Rechtsanwälte PartG mbB

(57) **Abstract**

With respect to a clad steel-welded steel having a cladding metal with a base metal and having a composition which contains, in mass%, C: 0.04% to 0.10%, Si: 0.10% to 0.30%, Mn: 1.30% to 1.80%, Ni: 0.10% to 0.50%, Cr: 0.01% to 0.10%, Mo: 0.05% to 0.40%, V: 0.02% to 0.06%, Nb: 0.01% to 0.04%, Ti: 0.005% to 0.025%, Al: 0.015% to 0.050%, and N: 0.0030% to 0.0100%, and in which a mass ratio of Ti content to N content is within a range of 1.5 to 4.0, and the balance is composed of Fe and inevitable impurities, heat and hold the clad steel-welded steel pipe at 950°C to 1050°C as a first stage austenitization, followed by cooling with an average cooling rate of 10°C/min to 35°C/min, heat and hold the clad steel-welded steel pipe within a range of 950°C to 990°C as a second stage austenitization, perform quenching by cooling with the average cooling rate within a range of 500°C/min to 1500°C/min at 700°C to 500°C, and then perform tempering at 500°C to 650°C that is equal to or lower than an AC1 temperature.

## Description

### TECHNICAL FIELD

The present disclosure relates to a clad steel-welded steel pipe using clad steel, which can be suitably used for natural gas pipelines or the like, and a method for producing the same.

### BACKGROUND

A clad steel sheet used for natural gas pipelines or the like is required to have low-temperature toughness and corrosion resistance. However, it is difficult to satisfy both properties with a single steel. Thus, a clad steel sheet obtained by joining a plate material (cladding metal) of stainless steel (SUS316L or the like) or a Ni-based alloy (ASTM B443 UNS N06625, ASTM B424 UNS N08825 or the like) having excellent corrosion resistance to a steel sheet (base metal) having excellent low-temperature toughness is applied. Appropriate material and thickness are applied to the cladding metal depending on a use environment. Since expensive cladding material is not used more than necessary, the clad steel sheet can be produced at a lower cost than a case of production with only the cladding metal. Therefore, the clad steel sheet is a steel sheet that achieves both economic efficiency and functionality, and is desired to have a higher performance.

API (American Petroleum Institute) 5L X grade C-Mn steel is often used for the base metal for pipelines. The base metal is produced by predetermined quenching, tempering, controlled rolling (TMCP, which is an abbreviation for "Thermo Mechanical Control Process"), or the like. On the other hand, a steel pipe used in this field is used as a clad steel pipe by forming a clad steel sheet into a pipe shape and then performing welding in a longitudinal direction by welding operation in general. In recent years, since parts of a pipe are exposed to a low temperature (about -40°C) during an emergency stop of a pipeline, there is a risk of low-temperature brittle fracture. Not only a base metal but also a weld metal and a weld heat-affected zone (HAZ) of the weld metal are strictly required to have not only strength but also low-temperature toughness. However, particularly in HAZ, since the weld metal is heated to a high temperature during welding, coarsening of crystal grains is likely to occur, and HAZ toughness is significantly reduced in an as-welded material of a related art.

Based on such a background, in order to ensure toughness over an entire welded steel pipe, a technique of improving toughness of a weld joint by applying a post-weld heat treatment in addition to optimization of a chemical composition of a weld metal has also been disclosed.

For example, JPH10-237594A discloses a method for producing a welded steel pipe, in which a welded steel pipe after being formed by welding is heated and held at 800°C to 1200°C and then cooled, or after this cooling, the welded steel pipe is again heated and held at 800°C or lower and then cooled.

### SUMMARY

However, as for heat treatment conditions for performing tempering in the second stage following the first stage austenitization described in the method of JPH10-237594A, unless rapid temperature rise (1.0°C/sec or higher) such as high-frequency heating is performed, a metal structure of the weld metal, which is a solidified structure, is not refined by only one austenitization. Furthermore, even when the process is repeated a plurality of times, it is not possible to ensure stable strength and toughness over the entire welded joint unless the austenitization and cooling conditions in the first and second stages are performed within appropriate ranges. Therefore, in order to ensure stable toughness in the post-weld heat treatment of the welded steel pipe, it is important to optimize the post-weld heat treatment conditions. Furthermore, in order to ensure the toughness of the HAZ, it is also necessary to optimize the chemical composition of the base metal.

In order to obtain good low-temperature toughness over the entire steel pipe including a welded portion of the welded steel pipe using the clad steel sheet for a pipeline or the like, it is necessary to perform appropriate post-weld heat treatment in addition to the optimization of the chemical composition of the base metal. Furthermore, in consideration of the economic efficiency, it is necessary to ensure stable low-temperature toughness in a welded steel pipe subjected to a post-weld heat treatment that can be batch processed in a general heating furnace without using a special device such as a high-frequency heating device.

In view of the above circumstances, illustrative aspects of the present disclosure provide a clad steel-welded steel pipe having excellent low-temperature toughness, which is suitably used for a line pipe for natural gas or the like, in a welded steel pipe subjected to a post-weld heat treatment performed by a heating furnace or the like.

### Solution to Problem

An aspect of a method for producing a clad steel-welded steel pipe of the present disclosure includes: preparing a clad steel-welded steel pipe by welding an annular clad steel sheet that is obtained by combining a cladding metal with a base metal as C-Mn steel, the clad steel-welded steel pipe having a composition which contains, in mass%, C: 0.04% to 0.10%, Si: 0.10% to 0.30%, Mn: 1.30% to 1.80%, Ni: 0.10% to 0.50%, Cr: 0.01% to 0.10%, Mo: 0.05% to 0.40%, V: 0.02% to 0.06%, Nb: 0.01% to 0.04%, Ti: 0.005% to 0.025%, Al: 0.015% to 0.050%, and N: 0.0030% to 0.0100%, and in which a mass ratio of Ti content to N content is within a range of 1.5 to 4.0, and the balance is composed of Fe and inevitable impurities; and performing a post-weld heat treatment to the clad steel-welded steel pipe, the post-weld heat treatment including: heating and holding the clad steel-welded steel pipe at 950°C to 1050°C as a first stage austenitization, followed by cooling with an average cooling rate of 10°C/min to 35°C/min; heating and holding the clad steel-welded steel pipe within a range of 950°C to 990°C as a second stage austenitization, in a cooling step after the second stage austenitization, performing quenching by cooling with the average cooling rate within a range of 500°C/min to 1500°C/min at 700°C to 500°C; and then performing tempering at 500°C to 650°C that is equal to or lower than an AC1 temperature.

According to an aspect of a clad steel-welded steel pipe, there is provided a clad steel-welded steel pipe made of an annular clad steel that is obtained by combining a cladding metal with a base metal as C-Mn steel. The C-Mn steel has a composition which contains, in mass%, C: 0.04% to 0.10%, Si: 0.10% to 0.30%, Mn: 1.30% to 1.80%, Ni: 0.10% to 0.50%, Cr: 0.01% to 0.10%, Mo: 0.05% to 0.40%, V: 0.02% to 0.06%, Nb: 0.01% to 0.04%, Ti: 0.005% to 0.025%, Al: 0.015% to 0.050%, and N: 0.0030% to 0.0100%, and in which a mass ratio of Ti content to N content is within a range of 1.5 to 4.0, and the balance is composed of Fe and inevitable impurities. A weld metal in the C-Mn steel has an average EBSD grain size of 14 µm or less and a maximum EBSD grain size of 70 µm or less when misorientation between adjacent crystals is 15° or more.

According to the present disclosure, a clad steel-welded steel pipe excellent in low-temperature toughness can be obtained.

### BRIEF DESCRIPTION OF DRAWINGS

FIGURE is a cross-sectional view showing a clad steel-welded steel pipe and a sampling position of a Charpy impact test piece for evaluating HAZ toughness in an example of the present disclosure.

### DETAILED DESCRIPTION

In the present embodiment and Examples, tensile properties and Charpy impact properties of the materials under different post-weld heat treatment conditions are investigated using a welded steel pipe obtained by molding a hot rolled material and performing welding. As a result, the present inventors have found a method for producing a clad steel-welded steel pipe in which low-temperature toughness of a base metal and a weld joint is improved by performing two-stage austenitization and subsequent post-weld heat treatment based on tempering under appropriate conditions, and have completed the present embodiment.

The C-Mn steel used in the present disclosure can be melted according to a common method by aiming at the composition of the base metal defined in the present disclosure, and the method is not particularly limited in the present disclosure.

In addition, for example, a material having corrosion resistance is appropriately selected as a cladding metal to be combined with the base metal depending on the purpose of use, and melting can be performed according to a common method with a composition according to the purpose as a target.

The base metal and the cladding metal can be formed into clad steel by hot rolling or the like. The cladding ratio and the thickness of each material in the clad steel are not particularly limited, and examples of a thickness of the base metal include 5.0 to 55.0 mm, and examples of a thickness of the cladding metal include 1.5 to 6.0 mm.

In addition, as described above, a common method such as hot rolling can be adopted for the production of the clad steel, and a production method for obtaining the clad steel is not particularly limited in the present disclosure.

The clad steel is processed into an annular shape by a pressing machine, a ring mill, or the like, and is welded. In the welding, a similar metal can be used as a welding material for both the base metal and the cladding metal. For the similar metal, a material having the same composition as that of the base metal and the cladding metal, or a composition similar to the compositions of these materials is used. The composition of a weld material used for welding the base metal is preferably selected so as to obtain a target welding metal in the present disclosure.

As a welding method, submerged arc welding or the like can be adopted. However, in the present embodiment, the welding method is not limited to a specific method, and various welding methods can be used.

After welding, post-weld heat treatment defined in the present disclosure is performed.

First, the clad steel is heated and held at 950°C to 1050°C for the first stage austenitization, and then cooled at an average cooling rate of 10°C/min to 35°C/min.

The heating and holding may be performed using, for example, a heating furnace. The temperature rising rate during heating is not particularly limited, and the temperature rising can be performed at 1°C/min to 10°C/min by using a common heating furnace. In addition, the holding time is preferably set to a time during which the temperature of the entire target steel is within the above-described temperature range. Depending on the thickness of the clad steel, a time of, for example, about 10 to 60 minutes can be shown. Incidentally, the holding temperature may be determined based on a thickness center of the clad steel.

After heating and holding, air cooling, water cooling, polymer quenching, oil quenching, air blast cooling, or the like is selected to cool the clad steel at an average cooling rate of 10°C/min to 35°C/min. The cooling may be controlled such that the above-described cooling rate is obtained at the thickness center of the clad steel. The cooling rate may be controlled within, for example, a range of up to 300°C.

Next, the clad steel is heated and held at the second stage austenitization temperature, and is cooled at an average cooling rate of 500°C/min to 1500°C/min at 700°C to 500°C in the cooling process.

The heating and holding are performed on the clad steel subjected to the first stage austenitization. In this case, the clad steel may be cooled to room temperature, or may be a clad steel that has reached a temperature of 200 °C.

The heating and holding at the second stage austenitization temperature can be performed using, for example, a heating furnace. The temperature rising rate during heating is not particularly limited, and the temperature rising can be performed at 1°C/min to 10°C/min by using a common heating furnace. In addition, the holding time is preferably set to a time during which the temperature of the entire target steel is within the above-described temperature range. Depending on the thickness of the clad steel, a time of, for example, about 10 to 60 minutes can be shown. Incidentally, the holding temperature may be determined based on a thickness center of the clad steel.

In the cooling process after heating and holding, water cooling, polymer quenching, oil quenching, air blast cooling, air cooling, or the like is selected to cool the clad steel at an average cooling rate of 500°C/min to 1500°C/min within the range of 700°C to 500°C. The cooling may be controlled such that the above-described cooling rate is obtained at the thickness center of the clad steel. In the cooling process up to 700°C, the cooling rate is not limited in the present embodiment. In the cooling process at a temperature lower than 500°C, the cooling rate is not limited in the present embodiment, and for example, cooling may be performed by water cooling.

After the heat treatment for the first stage and second stage austenitization, a tempering treatment of heating and holding at 500°C to 650°C is performed. This temperature is lower than an AC1 temperature, which is austenite transformation temperature at which austenite begins to form.

The tempering is performed on the clad steel subjected to the second stage austenitization. In this case, the clad steel may be cooled to room temperature, or may be a clad steel that has reached a temperature of 100°C.

The tempering may be performed using a heating furnace or the like. The temperature rising rate is not particularly limited, and for example, the temperature rising can be performed at 1°C/min to 10°C/min. In addition, the holding time is not particularly limited, and the holding may be performed such that the temperature is obtained at the thickness center of the base metal. For example, a time of about 0.5 hours to 3 hours can be shown. Cooling after the tempering may be performed by air cooling, furnace cooling, or the like, and the cooling method is not limited.

According to the present embodiment, a clad steel-welded steel pipe excellent in the low-temperature toughness can be produced by optimizing the post-weld heat treatment conditions and the composition of the weld metal and the base metal.

In the weld metal, an average EBSD grain size is 14 µm or less and a maximum EBSD grain size is 70 µm or less when misorientation between adjacent crystals is 15° or more, and thus, the weld metal is excellent in low-temperature toughness.

In the electron back scatter diffraction pattern (EBSD) method, a crystal orientation is analyzed based on a diffraction pattern in which electrons radiated to a sample are diffracted and emitted from the sample as reflected electrons. An acceleration voltage, a radiation current, and a measurement area are determined, and the measurement is performed at a predetermined pitch.

In one embodiment, the weld metal after the post-weld heat treatment has a material property in which tensile strength is 535 MPa or more and 0.5% YS. is 450 MPa or more, and has a performance in which minimum absorption energy at -40°C (Min.vE_{-40°C}) in a Charpy impact test is 130 J or more.

As for the base metal after the post-weld heat treatment, tensile strength is 535 MPa or more, 0.5% Y S. is 450 MPa or more, minimum absorption energy at -80°C (Min.vE_{-80°C}) is 300 J or more, a fracture appearance transition temperature (FATT) is -80°C or lower in a Charpy impact test, and minimum absorption energy at -40°C (Min.vE_{-40°C}) is 150 J or more in a Charpy impact test for a test piece sampled from a weld heat-affected zone.

That is, in the clad steel-welded steel pipe of the present embodiment, the low-temperature toughness is excellent over the entire base metal and the weld joint.

Further, the technique described in the above embodiment is not limited to a steel pipe as long as the chemical compositions of the base metal and the weld metal and the post-weld heat treatment conditions can be satisfied, and the technique can be applied to any welded structure such as a steel sheet which is not formed into a tubular shape.

### {Overview}

Hereinafter, the scope of limitation of the conditions in the present disclosure will be described in detail.

### • First stage austenitization temperature: 950°C to 1050°C

The first stage austenitization (corresponding to normalizing) is performed for the purpose of modifying a solidified structure and a HAZ structure of the weld metal of the C-Mn steel. Therefore, the lower limit of the first stage austenitization temperature is set to 950°C because the temperature of the entire welded portion is required to be equal to or higher than an AC3 temperature, which is a temperature at which transformation of ferrite into austenite is completed upon heating. On the other hand, if the temperature of the austenitization is too high, austenite grains become coarse, and a metal structure after cooling becomes coarse. As a result, the structures cannot be refined by the second stage austenitization. Therefore, the upper limit of the first stage austenitization temperature is set to 1050°C. For the same reason, it is preferable to set the lower limit of the first stage austenitization temperature to 960°C and the upper limit of the first stage austenitization temperature to 1020°C. For example, the first stage austenitization temperature may be set to between 970°C and 1000°C, both inclusive.

Incidentally, the HAZ (weld heat-affected zone) refers to an area in which a microstructure or a macrostructure of the base metal is changed due to a thermal effect of welding.

### • Average cooling rate from first stage austenitization temperature: 10°C/min to 35°C/min

The solidified structure and the HAZ structure of the weld metal can be modified by performing normalizing by air cooling from the first stage austenitization temperature. Regarding the air cooling, it is preferable that the average cooling rate of a sheet thickness center portion of a welded steel pipe is within a range of 10°C/min to 35°C/min. In a case where the average cooling rate is less than 10°C/min, proeutectoid ferrite and pearlite structures are coarsened. In a case where the average cooling rate is more than 35°C/min, a Widmansteten structure or a needle-shaped bainite structure is formed in the welded portion. Even when the second stage austenitization is performed using the coarse ferrite-pearlite structure, the Widmansteten structure, and the needle-shaped bainite structure as a starting structure, a target microstructure cannot be obtained, and the effect of improving toughness caused by the post-weld heat treatment is obtained. For the same reason, it is preferable to set the lower limit of the cooling rate to 15°C/min and the upper limit of the cooling rate to 30°C/min. For example, the average cooling rate from first stage austenitization temperature may be set to between 15°C/min to 30°C/min, both inclusive. The cooling rate can be determined based on the fact that the cooling rate is obtained at the sheet thickness center portion of the clad steel sheet. The cooling rate is related to the thickness of the steel sheet. When the thickness of the steel sheet is within a range of 20 mm to 60 mm, the cooling rate can be ensured by air cooling. Water cooling, polymer quenching, oil quenching, air blast cooling, or the like may also be applied as a cooling method in addition to the air cooling as long as the cooling rate can be satisfied regardless of the plate thickness.

### •Second stage austenitization temperature: 950°C to 990°C

The second stage austenitization (corresponding to quenching) is performed for the purpose of refining the structures of the base metal, the HAZ (weld heat-affected zone), and the weld metal portion. In the clad steel, a solution heat treatment for the cladding metal (for example, about 980°C in ASTM B443 UNS N06625) and a heat treatment for quenching the base metal are performed, and thus the C-Mn steel base metal needs to be quenched from a temperature higher than a normal quenching temperature (for example, 850°C to 900°C). Therefore, the lower limit of the second stage austenitization temperature is set to 950°C in consideration of the solution heat treatment of the cladding metal. On the other hand, when the temperature of the second stage austenitization is too high, the austenite grains are coarsened, and as a result, the toughness is lowered. Therefore, the upper limit of the second stage austenitization temperature is set to 990°C. For example, the second stage austenitization temperature may be set to between 960°C and 980°C, both inclusive.

### • Average cooling rate at 700°C to 500°C in cooling step after second stage austenitization: 500°C/min to 1500°C/min

The base metal can have good strength and low-temperature toughness by performing quenching by means of water cooling from the second stage austenitization temperature. Regarding the water cooling, in a case where the average cooling rate is lower than 500°C/min, the strength decreases due to the formation of proeutectoid ferrite, and in a case where the average cooling rate is higher than 1500°C/min, the metal structure becomes needle-shaped and the toughness decreases. The cooling rate can be determined by determining that the average cooling rate at 700°C to 500°C of the sheet thickness center portion of the clad steel sheet is within the range of 500°C/min to 1500°C/min.

The cooling rate can be adjusted using, for example, a water tank in which the water temperature is controlled to 30°C or lower. The cooling rate is related to the thickness of the steel sheet. When the thickness of the steel sheet is within a range of 20 to 60 mm, the average cooling rate at 700°C to 500°C of a thickness center can be ensured by using the water tank. For the same reason, it is preferable to set the lower limit of the average cooling rate to 700°C/min and the upper limit of the average cooling rate to 1200°C/min. For example, the average cooling rate at 700°C to 500°C of the sheet thickness center portion of the clad steel sheet in the cooling step after the second stage austenitization may be set to between 850°C/min to 1020°C/min, both inclusive. As long as the cooling rate can be satisfied, the cooling method is not limited to water quenching, and polymer quenching, oil quenching, air blast cooling, or air cooling may also be applied.

The heating and holding time of the first and second stage austenitizations is not limited because the structure modification and the structure refinement are achieved by reaching the temperature described above. However, it is preferable that the holding time is within a range of 10 minutes to 60 minutes because the uniform heating of the entire welded steel pipe is insufficient if the holding time is short, and the production cost increases if the holding time is long.

The temperature rising rate to the temperature of the first and second stage austenitizations is not particularly limited. However, rapid temperature rise makes it difficult to ensure uniform heating of the entire welded steel pipe and causes deformation of the steel pipe. Further, when the temperature rising rate is too low, the oxidation on a surface of the cladding metal is promoted and the productivity deteriorates. Therefore, it is preferable that the average temperature rising rate from the AC3 transformation temperature to the austenitization temperature is 1°C/min to 10°C/min. It is preferable to obtain the temperature rising rate at the thickness center of the base metal.

### • Tempering temperature: 500°C to 650°C

The toughness of the base metal can be improved by performing tempering after the quenching. At this time, it is desirable to perform tempering at 500°C to 650°C using a heating furnace.

### • EBSD grain size of weld metal portion: 14 µm or less on average and 70 µm or less at maximum

EBSD (electron backscatter diffraction) is a method of measuring orientation of crystals. In general, it has been reported that in the case of steel, the grain size (EBSD grain size) of crystal grains surrounded by a high-angle grain boundary of 15° or more has a correlation with toughness. The smaller the EBSD grain size, the better the low-temperature toughness of the steel. According to the production method of the present disclosure, the weld metal portion after the second stage austenitization has an average EBSD grain size of 14 µm or less and a maximum EBSD grain size of 70 µm or less, and good low-temperature toughness is obtained.

The average EBSD grain size referred to herein is a weighted average value obtained by weighting coarse EBSD grains that are a main cause of the reduction in toughness. Specifically, a weight was given to coarse particles by calculating a ratio of individual grain sizes based on a total value of grain sizes of EBSD grains within a measurement range, and a weighted average value has been determined based on an actual EBSD grain size and a composition ratio thereof.

### • Composition of weld metal

In an aspect of the present disclosure, by optimizing the chemical composition of a weld metal in C-Mn steel and performing two-stage austenitization and tempering, it is possible to obtain a weld metal of a welded steel pipe using a clad steel having a tensile strength of 535 MPa or more and a 0.5% YS. of 450 MPa or more, and having a performance in which minimum absorption energy at -40°C in a Charpy impact test (Min.vE_{-40°C}) is 130 J or more. For example, the weld metal having the tensile strength of between 572 MPa and 603MPa and the 0.5% YS. of between 462 MPa and 482 MPa, and having a performance in which minimum absorption energy at -40°C in a Charpy impact test (Min.vE_{-40°C}) is 135 J or more, may be obtained.

The chemical composition of the optimized weld metal is shown below. It should be noted that the term "weld metal" referred to herein refers to a product obtained by melting and mixing a welding material and a base metal by welding, and then melting and solidifying the mixture.

It is preferable that a weld metal has a composition which contains, in mass%, C: 0.04% to 0.14%, Si: 0.10% to 0.50%, Mn: 1.30% to 1.80%, Ni: 0.01% to 0.50%, Cr: 0.01% to 0.10%, Mo: 0.01% to 0.40%, Ti: 0.005% to 0.040%, N: 0.0020% to 0.0100%, and in which the balance is Fe and inevitable impurities and the inevitable impurities are defined as, in mass%, P: 0.02% or less, S: 0.015% or less, Cu: 0.25% or less, V: 0.02% or less, Al: 0.02% or less, Nb: 0.02% or less, and further contains B: 0.001% to 0.003% as a selective element.

The reasons for limiting the components in the weld metal composition are as follows. In addition, the contents shown below are all expressed in mass%.

### C: 0.04% to 0.14%

C is a necessary additive element from the viewpoint of ensuring strength and providing an overmatch j oint, and thus, the lower limit of C is set to 0.04%. However, if the content is more than 0.14%, toughness and weldability decrease due to an increase in strength. Thus, the upper limit of C is set to 0.14%. For example, C may be contained in an amount about 0.08%.

### Si: 0.10% to 0.50%

Si is a deoxidizing agent or an element necessary for ensuring strength, and thus, the lower limit of Si is set to 0.10%. On the other hand, if Si is excessively contained, toughness and weldability decrease. Thus, the upper limit of Si is set to 0.50%. For example, Si may be contained in an amount between 0.25% and 0.30%, both inclusive.

### Mn: 1.30% to 1.80%

Similarly to Si, Mn is a deoxidizing element or an element necessary for ensuring strength and quenchability during quenching. In order to exhibit the effect, the content of Mn is required to be 1.30% or more. An excessive content of Mn leads to excessive quenchability and a decrease in the toughness. Thus, the upper limit of Mn is set to 1.80%. For example, Mn may be contained in an amount between 1.35% and 1.48%, both inclusive.

### Ni:0.01% to 0.50%

Ni is an element that improves the quenchability and improves the toughness of a welded portion. Thus, the lower limit of Ni is set to 0.01%. An excessive content of Ni leads to excessive quenchability and a decrease in the toughness. Thus, the upper limit of Ni is set to 0.50%. For example, Ni may be contained in an amount between 0.05% and 0.07%, both inclusive.

### Cr: 0.01% to 0.10%

Cr is an element that improves the quenchability. Thus, the lower limit of Cr is set to 0.01%. An excessive content of Cr leads to excessive quenchability and a decrease in the toughness. Thus, the upper limit of Cr is set to 0.10%. For example, Cr may be contained in an amount between 0.04% and 0.05%, both inclusive.

### Mo: 0.01% to 0.40%

Mo is an element that improves the quenchability and improves strength of a welded portion after quenching. Thus, the lower limit of Mo is set to 0.01%. On the other hand, an excessive content of Mo leads to a decrease in the toughness. Thus, the upper limit of Mo is set to 0.40%. For example, Mo may be contained in an amount between 0.04% and 0.21%, both inclusive.

### Ti: 0.005% to 0.040%

Ti has an effect of forming carbides and nitrides finely dispersed in steel and refining austenite grains. If the content of Ti is less than 0.005%, the effect is small, and if the content thereof is more than 0.040%, the toughness greatly deteriorates due to a notch effect caused by aggregation and coarsening of carbides and nitrides. Therefore, the lower limit of Ti is set to 0.005%, and the upper limit of Ti is set to 0.040%. For example, Ti may be contained in an amount between 0.016% and 0.023%, both inclusive.

### B:0.001% to 0.003%

B is an element that improves the quenchability, and improves strength and the toughness because of preventing generation of grain boundary ferrite, and is therefore contained as necessary. If the content of B is less than 0.001%, the effect is small, and if the content is excessive, the strength is increased and the toughness is lowered. Therefore, the lower limit of B is set to 0.001% and the upper limit of B is set to 0.003%.

### N: 0.0020% to 0.0100%

N is effective for miniaturization of crystal grains by bonding with Ti to precipitate in the steel as TiN. In addition, N is very effective for improving the toughness because N prevents coarsening of crystal grains during a solution heat treatment for the reason that N has a high dissolution temperature and is stably present even at a relatively high temperature. If the content of N is too small, a sufficient effect cannot be obtained. Therefore, the lower limit of N is set to 0.0020%. However, if the content is more than 0.0100%, the solute N increases, and the toughness of the HAZ decreases. Therefore, the upper limit of N is set to 0.0100%. For example, N may be contained in an amount between 0.0030% and 0.0054%, both inclusive.

The essential composition elements and the selective elements of the weld metal of one form of the clad steel pipe are as described above. The balance may substantially contain, as inevitable impurities due to dilution or the like from Fe and the base metal, P: 0.02% or less, S: 0.015% or less, Cu: 0.25% or less, V: 0.02% or less, Al: 0.02% or less, and Nb: 0.02% or less in mass%. The reason for this will be described below.

### P: 0.02% or less

Since P is an impurity, it is desirable that the content of P is as small as possible. The upper limit of P is set to 0.02% which can be industrially implemented.

### S: 0.015% or less

Since S is an impurity, it is desirable that the content of S is as small as possible. The upper limit of S is set to 0.015% which can be industrially implemented. Furthermore, it is preferable to set the content to 0.005% or less.

### Cu: 0.25% or less

Cu may cause the toughness of the welded portion to decrease. Therefore, the upper limit of Cu is set to 0.25%. For example, Cu may be contained in an amount of 0.14% or less.

### V: 0.02% or less

V is an element contained in the weld metal as an inevitable impurity due to dilution from the base metal, and V may cause toughness of the welded portion to decrease. The amount of V is limited to about the amount of increase due to dilution from the base metal, and the upper limit of V is set to 0.02%. For example, V may be contained in an amount of 0.007% or less.

### Al: 0.02% or less

When Al is contained in the base metal, Al is also contained in the weld metal as an inevitable impurity due to dilution from the base metal. Therefore, in the weld metal, the amount of Al is limited to about the amount of increase due to dilution from the base metal, and the upper limit of Al is set to 0.02%. For example, Al may be contained in an amount of 0.009% or less.

### Nb: 0.02% or less

Nb is an element contained in the weld metal as an inevitable impurity due to dilution from the base metal, and may cause the toughness of the welded portion to decrease. The amount of Nb is limited to about the amount of increase due to dilution from the base metal, and the upper limit of Nb is set to 0.02%. For example, Nb may be contained in an amount of 0.005% or less.

### Material of base metal

In an aspect of the present disclosure, by optimizing the chemical composition of the base metal and performing two-stage austenitization and tempering, the strength properties (0.5% YS. ≥ 450 MPa, tensile strength ≥ 535 MPa) of API5L65 pipe grade are ensured, and it is possible to produce a welded steel pipe using a clad steel having performances in which the minimum absorption energy at -80°C (Min.vE_{-80°C}) in a Charpy impact test is 300 J or more, the fracture appearance transition temperature (FATT) is -80°C or lower, and the minimum absorption energy at -40°C (Min.vE_{-40°C}) in the Charpy impact test of a test piece sampled from HAZ is 150 J or more. For example, it may be possible to produce the welded steel pipe having the 0.5% YS. between 452 MPa and 477 MPa and the tensile strength of between 557 MPa and 579 MPa, and having a performance in which the minimum absorption energy at -80°C (Min.vE_{-80°C}) in the Charpy impact test is 351 J or more, the fracture appearance transition temperature (FATT) is -85°C or lower, and the minimum absorption energy at -40°C (Min.vE_{-40°C}) in the Charpy impact test of the test piece sampled from HAZ is 151 J or more.

An example of the optimized composition of the base metal (C-Mn steel) is shown below.

The C-Mn steel contains, in mass%, C: 0.04% to 0.10%, Si: 0.10% to 0.30%, Mn: 1.30% to 1.80%, Ni: 0.10% to 0.50%, Cr: 0.01% to 0.10%, Mo: 0.05% to 0.40%, V: 0.02% to 0.06%, Nb: 0.01% to 0.04%, Ti: 0.005% to 0.025%, Al: 0.015% to 0.050%, and N: 0.0030% to 0.0100%, in which Ti/N which is a mass ratio of Ti content to N content is within a range of 1.5 to 4.0, and the balance is composed of Fe and inevitable impurities.

The reasons for limiting the components in the base metal are as follows. In addition, the contents shown below are all expressed in mass%.

### C: 0.04% to 0.10%

C is a necessary additive element from the viewpoint of ensuring the strength, and thus the lower limit of C is set to 0.04%. However, if the content is more than 0.10%, toughness and weldability decrease due to an increase in strength. Thus, the upper limit of C is set to 0.10%. For the same reason, it is preferable to set the lower limit of C to 0.05% and the upper limit of C to 0.08%. For example, C may be contained in an amount about 0.06%. Si: 0.10% to 0.30%

Si has a deoxidizing action during the melting of steel, and needs to be contained in a predetermined amount or more in order to obtain sound steel. In addition, Si is an element necessary to ensure the strength. Thus, the lower limit of Si is set to 0.10%. On the other hand, if Si is excessively contained, toughness and weldability decrease. Thus, the upper limit of Si is set to 0.30%. For the same reason, it is preferable to set the upper limit of Si to 0.25%. For example, Si may be contained in an amount between 0.13% and 0.17%, both inclusive.

### Mn: 1.30% to 1.80%

Mn is useful as a deoxidizing element similarly to Si, and also contributes to the improvement in the quenchability of steel. In order to exhibit the effect, the content of Mn is required to be 1.30% or more. On the other hand, an excessive content of Mn leads to a decrease in the toughness. Thus, the upper limit of Mn is set to 1.80%. For example, Mn may be contained in an amount between 1.46% and 1.48%, both inclusive.

### Ni: 0.10% to 0.50%

Ni is an element necessary for ensuring the strength by improving quenchability and ensuring the low-temperature toughness. Thus, the lower limit of Ni is set to 0.10%. On the other hand, an excessive content of Ni impairs economic efficiency. Thus, the upper limit of Ni is set to 0.50%. For the same reason, it is preferable to set the lower limit of Ni to 0.15% and the upper limit of Ni to 0.40%. For example, Ni may be contained in an amount between 0.27% and 0.28%, both inclusive.

### Cr: 0.01% to 0.10%

Cr improves the strength and toughness of the base metal, but as the content increases, the weld crack susceptibility increases, and the strength increases. Therefore, the lower limit of Cr is set to 0.01%, and the upper limit of Cr is set to 0.10%. For example, Cr may be contained in an amount between 0.02% and 0.03%, both inclusive.

### Mo: 0.05% to 0.40%

Mo is an element that improves the quenchability and improves the strength of the base metal after quenching, but when the content of Mo is less than 0.05%, the effect is not sufficiently obtained. Therefore, the lower limit of Mo is set to 0.05%. On the other hand, an excessive content of Mo leads to a decrease in the toughness. Thus, the upper limit of Mo is set to 0.40%. For the same reason, it is preferable to set the upper limit of Mo to 0.30%. For example, Mo may be contained in an amount about 0.14%.

### V: 0.02% to 0.06%

V is an important element for ensuring the strength of steel, but excessive addition of V adversely affects toughness. Therefore, the lower limit of V is set to 0.02%, and the upper limit of V is set to 0.06%. For the same reason, it is preferable to set the upper limit of V to 0.04%. For example, V may be contained in an amount about 0.03%.

### Nb: 0.01% to 0.04%

Nb prevents coarsening of austenite grains and is effective for refinement of crystal grains and improvement of strength by uniformly dispersing fine Nb carbides and the like in a base metal when steel is heated to a quenching temperature. Therefore, the lower limit of Nb is set to 0.01%. On the other hand, an excessive content of Nb causes deterioration of toughness due to coarsening of Nb carbides. Thus, the upper limit of Nb is set to 0.04%. For example, Nb may be contained in an amount between 0.028% and 0.031%, both inclusive.

### Ti: 0.005% to 0.025%

Ti has an effect of forming carbides and nitrides finely dispersed in steel and refining austenite grains. In addition, as will be described later, the nitride formed by bonding Ti with N has an effect of preventing coarsening of crystal grains of HAZ during welding. When the content of Ti is less than 0.005%, the effect is small, and when the content thereof is more than 0.025%, the toughness greatly deteriorates due to a notch effect caused by aggregation and coarsening of carbides and nitrides. Therefore, the lower limit of Ti is set to 0.005%, and the upper limit of Ti is set to 0.025%. For example, Ti may be contained in an amount between 0.013% and 0.015%, both inclusive.

### Al: 0.015% to 0.050%

Al is an element effective as a deoxidizing agent, and precipitated AlN prevents coarsening of austenite grains during a solution heat treatment, and the effect is not sufficiently obtained when the content of Al is less than 0.015%. Therefore, Al is contained in an amount of 0.015% or more. However, if the content of Al is more than 0.050%, the grain refinement effect is reduced, and the toughness value is also saturated. Therefore, the upper limit of Al is set to 0.050%. For the same reason, it is preferable to set the upper limit of Al to 0.040%. For example, Al may be contained in an amount between 0.026% and 0.028%, both inclusive.

### N: 0.0030% to 0.0100%

N is effective for miniaturization of crystal grains by bonding with Ti to precipitate in the steel as TiN. In addition, N has a high dissolution temperature and is stably present even at a relatively high temperature, so that coarsening of the crystal grains of the HAZ is prevented, which is very effective for improving the toughness of the HAZ. If the addition amount of N is too small, a sufficient effect cannot be obtained. Thus, the lower limit of N is set to 0.0030%. However, if the content of N exceeds 0.0100%, the amount of the solute N increases, and the toughness of the HAZ decreases. Therefore, the upper limit of N is set to 0.0100%. For example, N may be contained in an amount between 0.0047% and 0.0054%, both inclusive.

### Ti/N: 1.5 to 4.0

By appropriately adjusting the ratio of Ti to N, TiN which is stably and finely dispersed is generated, the HAZ of the base metal can be refined during welding, and coarsening of the grains of the HAZ can be prevented, so that the ratio of Ti/N, which is a mass ratio of Ti content to N content, is adjusted. If the ratio is less than 1.5, a sufficient effect of refinement of the grains cannot be obtained, whereas if the ratio is more than 4.0, excessive precipitation of TiN and coarsening of TiN significantly reduce the toughness of the base metal. For example, the ratio of Ti/N may be set to a value between 2.4 and 3.2, both inclusive.

In addition, as the inevitable impurities, in particular, P, S, and Cu have upper limits for the following reasons.

### P: 0.015% or less

Since P is an impurity, it is desirable that the content of P is as small as possible. The upper limit of P is set to 0.015% which can be industrially implemented. Further, it is preferable to set the content of P to 0.012% or less. For example, P may be contained in an amount of 0.014% or less.

### S: 0.005% or less

Since S is an impurity, it is desirable that the content of S is as small as possible. The upper limit of S is set to 0.005% which can be industrially implemented. Further, it is preferable to set the content of S to 0.003% or less. For example, S may be contained in an amount of 0.0005% or less.

### Cu: 0.05% or less

An excessive content of Cu increases the weld crack susceptibility, and therefore, it is desirable that the content of Cu is as small as possible. The upper limit of Cu is set to 0.05% which can be industrially implemented. Further, it is preferable to set the content of Cu to 0.03% or less.

### Material of cladding metal

In the present disclosure, a cladding metal of any material can be used depending on the purpose of use of the clad steel pipe. These materials are not particularly limited. For example, stainless steel, a Ni-based alloy, or the like having excellent corrosion resistance is used in a natural gas pipeline since an inner surface of the pipe is in a corrosive environment. For other applications, a Cu alloy, a Ni-Cu alloy, and the like are also used.

### {Example}

Hereinafter, Examples of the present disclosure will be described in comparison with Comparative Examples.

Steel having a composition (mass%, balance: Fe, and other inevitable impurities) shown in Table 1 was produced by continuous casting, and ASTM B443 UNS N06625 (Ni-based alloy) was used as a cladding metal and produced by a common method.

The steel was used as a base metal and was combined with a cladding metal to produce clad steel (a total thickness of 30 mm including a sheet thickness of the C-Mn steel of 27 mm and a sheet thickness of a cladding metal of 3 mm) was produced by hot rolling. The clad steel was provided with a U-groove, and joint welding was performed by submerged arc welding (SAW) using a welding material defined in AWS A5.17F7P6-EH14 or AWS A5.23F7P8-EG-G. The welding heat input was set to two conditions of 2.5 kJ/mm and 4.5 kJ/mm.

Table 2 shows a list of types of base metals used, welding heat input, and chemical compositions (mass%, balance: Fe, and other inevitable impurities) of weld metals formed by welding. These weld joints were subjected to post-weld heat treatment at a holding temperature and a cooling rate for austenitization in each stage shown in Table 3 and subsequent tempering (580°C × 2 hours).

**[Table 1]**

| Steel type | Chemical composition of base metal (mass%) | | | | | | | | | | | | | | |
|---|---|---|---|---|---|---|---|---|---|---|---|---|---|---|---|
| | C | Si | Mn | P | S | Ni | Cr | Cu | Mo | V | Nb | Ti | Al | N | Ti/N |
| A | 0.06 | 0.13 | 1.48 | 0.012 | 0.0003 | 0.27 | 0.02 | 0.03 | 0.14 | 0.03 | 0.031 | 0.015 | 0.028 | 0.0047 | 3.2 |
| B | 0.06 | 0.17 | 1.46 | 0.014 | 0.0005 | 0.28 | 0.03 | 0.03 | 0.14 | 0.03 | 0.028 | 0.013 | 0.026 | 0.0054 | 2.4 |
| C | 0.07 | 0.15 | 1.49 | 0.012 | 0.0006 | 0.26 | 0.02 | 0.01 | 0.15 | 0.03 | 0.026 | 0.016 | 0.023 | 0.0073 | 2.2 |

**[Table 2]**

| Test plate No. | Base metal | Welding heat input (kJ/mm) | Chemical composition of weld metal (mass%) | | | | | | | | | | | | | |
|---|---|---|---|---|---|---|---|---|---|---|---|---|---|---|---|---|
| | | | C | Si | Mn | P | S | Ni | Cr | Cu | Mo | V | Nb | Ti | Al | N |
| TP.1 | A | 4.50 | 0.08 | 0.30 | 1.35 | 0.011 | 0.0040 | 0.07 | 0.05 | 0.14 | 0.21 | 0.007 | 0.005 | 0.016 | 0.008 | 0.0054 |
| TP.2 | B | 2.50 | 0.08 | 0.25 | 1.48 | 0.020 | 0.0040 | 0.05 | 0.04 | 0.11 | 0.04 | 0.005 | <0.005 | 0.023 | 0.009 | 0.0030 |
| TP.3 | C | 2.50 | 0.09 | 0.21 | 1.57 | 0.022 | 0.0030 | 0.02 | 0.03 | 0.11 | 0.01 | 0.010 | 0.007 | 0.020 | 0.007 | 0.0044 |

**[Table 3]**

| Steel No. | Test plate No. | first stage austenitization | | second stage austenitization | | Reference |
|---|---|---|---|---|---|---|
| | | Heating temperature (°C) | Average cooling rate (°C/min) | Heating temperature (°C) | Average cooling rate (°C/min) at 700°C to 500°C | |
| 1 | TP.1 | 1000 | 3 | 980 | 1020 | Comparative Example |
| 2 | TP.1 | 1000 | 10 | 980 | 1020 | Inventive Example |
| 3 | TP.1 | 1000 | 15 | 980 | 1020 | |
| 4 | TP.1 | 1000 | 20 | 980 | 1020 | |
| 5 | TP.1 | 1000 | 30 | 980 | 1020 | |
| 6 | TP.1 | 1000 | 40 | 980 | 1020 | Comparative Example |
| 7 | TP.1 | 1000 | 850 | 980 | 1020 | |
| 8 | TP.1 | 1000 | 20 | 980 | 450 | |
| 9 | TP.1 | 1000 | 20 | 980 | 850 | Inventive Example |
| 10 | TP.1 | Omitted | | 980 | 1020 | Comparative Example |
| 11 | TP.2 | Omitted | | 980 | 850 | |
| 12 | TP.2 | Omitted | | 980 | 240 | |
| 13 | TP.2 | 1000 | 20 | 980 | 1020 | Inventive Example |
| 14 | TP.2 | 970 | 20 | 960 | 1020 | |
| 15 | TP.2 | 1000 | 20 | 930 | 850 | Comparative Example |
| 16 | TP.2 | 1030 | 20 | 1020 | 1020 | |
| 17 | TP.1 | As-welded material (Base metal: As Roll material) | | | | |
| 18 | TP.3 | As-welded material (Base metal: quenched-tempered material) | | | | |

After the first stage austenitization, the clad steel was cooled to 100°C to 200°C at each cooling rate, and subsequently subjected to the second stage austenitization. The average cooling rate described in this table was calculated based on results of temperature measurement by a thermocouple embedded in a total thickness (T)/2 (a position of 15 mm from the surface) in a vicinity of the weld metal.

The reached temperature during cooling in the first stage austenitization is not limited, and when retained γ-phase remains, mixed grains are formed by subsequent austenitization. Therefore, it is preferable to cool the clad steel to a temperature equal to or lower than at least Bf temperature, which is a temperature at which transformation of austenite to bainite is completed. In addition, as a comparison, using a test plate in which the base metal was an As Roll material or a quenched-tempered material, an as-welded material according to a production method in the related art which is produced by the same SAW was also prepared.

A tensile test piece and a Charpy impact test piece were sampled from a center of each weld test plate base metal and weld metal, and the strength and toughness of both test pieces were evaluated. The sampling direction of each tensile test piece was set to a circumferential direction (Transverse) of the base metal, and the direction of a weld line (Longitudinal) in the center of the weld metal. The Charpy impact test pieces were all sampled in the circumferential direction (Transverse).

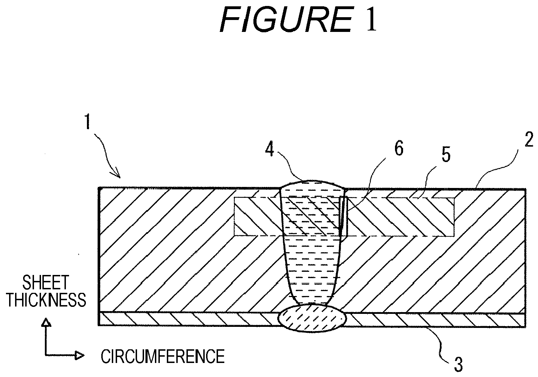

The FIGURE is a partial cross-sectional view of a clad steel-welded steel pipe 1 as a test sample, in which a base metal 2 is clad with a cladding metal 3, and a weld metal 4 is formed on the base metal 2 by welding. In order to evaluate HAZ toughness, a Charpy impact test piece 5 in which a notch 6 is formed in a melt line is sampled from a material present immediately below a surface of the base metal (at a depth of 2 mm).

The test method was as follows.

In the tensile test, a round bar tensile test piece (parallel portion diameter: 12.5 mm, G.L.: 50 mm) was sampled from each weld test plate, and a tensile test was performed at room temperature in accordance with JIS Z 2241 to determine 0.5% Y.S. (yield strength) and tensile strength T.S..

In the impact test, a 2 mm Charpy impact test piece with a V notch was sampled from an obtained test material as shown in the FIGURE, and was based on the specification of JIS Z2242.

The weld metal portion and HAZ were subjected to a Charpy impact test at a test temperature of -40°C in order to determine the minimum absorption energy at -40°C (Min.vE_{-40°C}). The base metal was subjected to a Charpy impact test at a test temperature of -80°C in order to determine the minimum absorption energy at -80°C (Min.vE_{-80°C}). As defined by a standard such as API, three test pieces were measured at the same temperature, and the lowest absorption energy was defined as the minimum absorption energy. Further, the FATT of the base metal was subjected to a Charpy impact test at any test temperature, and the FATT was determined based on a transition curve thereof.

In addition, samples were sampled from the weld metal portions of these test materials, and EBSD measurement was also performed by using OIM (orientation imaging microscopy) manufactured by TSL Corporation.

The EBSD measurement was performed on a surface from which the plate thickness × the circumferential direction can be seen, and a sample mirror-polished with colloidal silica having a particle diameter of 0.04 µm was prepared. The acceleration voltage was set to 15 kV, the measurement pitch was set to 1.0 µm, the measurement was performed in three visual fields each having a size of 400 × 1200 µm, and a weighted grain size was determined using OIM Data Collection software. The EBSD grain size was defined as a diameter of a circle (equivalent circle diameter) calculated so as to have the same area as an area of the particle based on an area of the grains surrounded by the high-angle grain boundary of 15° or more, and a weighted average value, which was obtained by calculating the average value based on each particle diameter and the abundance ratio, and a maximum value were determined. The obtained results are shown in Table 4.

**[Table 4]**

| Steel No. | Steel type | Weld metal | | | | | Base metal | | | | Heat-affected zone | Corrosion resistance | Reference |
|---|---|---|---|---|---|---|---|---|---|---|---|---|---|
| | | Tensile property | | Charpy impact property | EBSD grain size (µm) | | Tensile property | | Charpy impact property | | Charpy impact property | | |
| | | 0.5%Y.S. (MPa) | T.S. (MPa) | Min.vE_{-40°C} (J) | Average | Maximum | 0.5%Y.S. (MPa) | T.S. (MPa) | Min.vE_{-80°C} (J) | FATT (°C) | Min.vE_{-40°C} (J) | | |
| 1 | TP.1 | 493 | 601 | 91 | 14 | 72 | 468 | 571 | 355 | -118 | 144 | A | Comparative Example |
| 2 | TP.1 | 482 | 596 | 141 | 13 | 52 | 476 | 578 | 362 | -113 | 163 | A | Inventive Example |
| 3 | TP.1 | 475 | 595 | 137 | 12 | 58 | 470 | 565 | 391 | -118 | 151 | A | |
| 4 | TP.1 | 481 | 603 | 143 | 12 | 44 | 476 | 574 | 387 | -125 | 157 | A | |
| 5 | TP.1 | 481 | 602 | 135 | 14 | 65 | 477 | 579 | 351 | -122 | 161 | A | |
| 6 | TP.1 | 508 | 614 | 53 | 15 | 84 | 493 | 581 | 312 | -110 | 129 | A | Comparative Example |
| 7 | TP.1 | 515 | 620 | 19 | 15 | 82 | 462 | 563 | 300 | -110 | 122 | A | |
| 8 | TP.1 | 433 | 528 | 92 | 14 | 73 | 428 | 542 | 428 | -95 | 84 | A | |
| 9 | TP.1 | 477 | 600 | 158 | 11 | 46 | 452 | 561 | 394 | -85 | 151 | A | Inventive Example |
| 10 | TP.1 | 527 | 529 | 7 | 17 | 126 | 454 | 559 | 407 | -98 | 13 | A | Comparative Example |
| 11 | TP.2 | 510 | 617 | 14 | 17 | 124 | 455 | 562 | 397 | -92 | 149 | A | |
| 12 | TP.2 | 427 | 551 | 16 | 18 | 100 | 419 | 526 | 454 | -98 | 91 | A | |
| 13 | TP.2 | 477 | 589 | 151 | 11 | 45 | 460 | 561 | 391 | -121 | 180 | A | Inventive Example |
| 14 | TP.2 | 462 | 572 | 155 | 11 | 52 | 458 | 557 | 377 | -117 | 187 | A | |
| 15 | TP.2 | 473 | 565 | 147 | 13 | 48 | 462 | 541 | 357 | -101 | 178 | B | Comparative Example |
| 16 | TP.2 | 533 | 621 | 7 | 18 | 110 | 524 | 619 | 13 | -63 | 8 | A | |
| 17 | TP.1 | 567 | 643 | 123 | 5 | 53 | 371 | 505 | 6 | -60 | 185 | A | |
| 18 | TP.3 | 554 | 630 | 195 | 6 | 50 | 486 | 588 | 120 | -80 | 120 | A | |

Steel No. 1 to No. 7 is obtained by changing the cooling rate after the first stage austenitization. Among them, Steel No. 1, No. 6, and No. 7 are comparative examples, and Steel No. 2, No. 3, No. 4, and No. 5 are inventive examples.

Regarding Steel No. 1 (Comparative Example), the cooling rate after the first stage austenitization is low, and coarse ferrite-pearlite is generated. Even when the second stage austenitization is performed with the preceding structure as a starting structure, coarse grains are contained in the EBSD grains in the weld metal. Therefore, good Charpy impact properties of the weld metal cannot be obtained. In Steel No. 6 (Comparative Example) and Steel No. 7 (Comparative Example), the cooling rate after the first stage austenitization is high, and Widmanstaetten ferrite or needle-shaped bainite is formed. Even when the second stage austenitization is performed with the preceding structure as a starting structure, the average EBSD grain size and the maximum EBSD grain size in the weld metal are large, and as a result, good Charpy impact properties cannot be obtained. In addition, the impact properties of the HAZ also deteriorate under these conditions.

In contrast, under the conditions of Steel No. 2 to No. 5, good impact properties and strength are obtained for any of the base metal, the HAZ, and the weld metal. From this, it is clear that, in order to obtain a good result in the welded steel pipe subjected to the post-weld heat treatment, it is necessary to set the cooling rate after the first stage austenitization within an optimum range.

Steel No. 8 (Comparative Example) is a comparative example in which the first stage austenitization is performed in an appropriate range, and the cooling rate at 700°C to 500°C after the second stage austenitization is reduced. When the cooling rate after the second stage austenitization is reduced, the base metal and the weld metal do not burn, and the strength decreases. In contrast, in Steel No. 9 (Inventive Example), the conditions for the first stage austenitization are the same as those of Steel No. 8, and the cooling rate at 700°C to 500°C after the second stage austenitization is within the range of the present disclosure. It is clear that good results can be obtained by setting the cooling rate of the second stage austenitization within an appropriate range.

Steel No. 10 (Comparative Example), No. 11 (Comparative Example), and No. 12 (Comparative Example) are comparative examples in which the first stage austenitization described in the present disclosure is omitted, and only the second stage austenitization and tempering are applied as the post-weld heat treatment. In the case of a method in which the temperature rising rate is limited, such as a heating furnace, even if the cooling rate after the austenitization is changed, the EBSD grain size of the weld metal cannot be reduced by performing the austenitization only once, and good impact properties cannot be obtained. In addition, the HAZ cannot obtain impact properties for the same reason.

Steel No. 13 (Inventive Example) is an inventive example in which a post-weld heat treatment is performed under the conditions of the present disclosure using a material (TP.2) having a reduced welding heat input. Under the post-weld heat treatment conditions of the present disclosure, even if the welding heat input is changed, good impact properties and strength are obtained for any of the base metal, the HAZ, and the weld metal.

Steel No. 14 (Inventive Example) is an inventive example in which the first stage austenitization temperature was set to 970°C and the second stage austenitization temperature was set to 960°C. Even if each austenitization temperature is lowered, good material properties over the entire weld joint are obtained within the condition range of the present technique.

Steel No. 15 (Comparative Example) is a comparative example in which the first stage austenitization temperature was set to 1000°C and the second stage austenitization temperature was set to 930°C. Although good results were obtained for the material properties of the C-Mn steel, it was found from the observation of the microstructure of the cladding metal that undissolved precipitates remained due to the decrease in the second stage austenitization temperature, and the solution heat treatment was insufficient at this temperature. Since corrosion resistance of such a cladding metal is reduced, the post-weld heat treatment conditions for the clad steel pipe are inappropriate. In the evaluation of corrosion resistance, electrolytic etching was applied to a test sample in accordance with JIS G0571 (2003) "Testing method for oxalic acid etching of stainless steel", and the presence or absence of undissolved precipitates was determined by observation of the microstructure after electrolytic etching, and the results were indicated by A (No) and B (Yes) in Table 4. In order to avoid excessive etching, the electrolysis time was 5 seconds to 10 seconds.

Steel No. 16 (Comparative Example) is a comparative example in which the first stage austenitization temperature was set to 1030°C and the second stage austenitization temperature was set to 1020°C. Due to the increase in the second stage austenitization temperature, the EBSD grain size is increased, and as a result, good low-temperature toughness cannot be obtained.

Steel No. 17 (Comparative Example) and No. 18 (Comparative Example) are comparative examples in which the base metal was an As Roll material or a quench-tempered material, the post-weld heat treatment was not performed after welding was performed under low heat input conditions, and various material tests were performed with welding in the related art. In steel No. 17, the weld metal has low impact properties, and the base metal has low strength and impact properties. Further, in Steel No. 18, the base metal and the weld metal have sufficient properties, but the HAZ toughness is low. From the results, in order to produce a welded steel pipe having excellent low-temperature toughness, it is necessary to perform a post-weld heat treatment under appropriate conditions.

From the above results, by applying appropriate post-weld heat treatment conditions, it is possible to produce a clad steel-welded steel pipe excellent in low-temperature toughness of a welded portion while maintaining strength properties required for API 5L X65 pipe grade.

## Claims

1. A method for producing a clad steel-welded steel pipe, the method comprising:
preparing a clad steel-welded steel pipe by welding an annular clad steel sheet that is obtained by combining a cladding metal with a base metal as C-Mn steel, the clad steel-welded steel pipe having a composition which contains, in mass%, C: 0.04% to 0.10%, Si: 0.10% to 0.30%, Mn: 1.30% to 1.80%, Ni: 0.10% to 0.50%, Cr: 0.01% to 0.10%, Mo: 0.05% to 0.40%, V: 0.02% to 0.06%, Nb: 0.01% to 0.04%, Ti: 0.005% to 0.025%, Al: 0.015% to 0.050%, and N: 0.0030% to 0.0100%, and in which a mass ratio of Ti content to N content is within a range of 1.5 to 4.0, and the balance is composed of Fe and inevitable impurities; and
performing a post-weld heat treatment to the clad steel-welded steel pipe, the post-weld heat treatment comprising:
heating and holding the clad steel-welded steel pipe at 950°C to 1050°C as a first stage austenitization, followed by cooling with an average cooling rate of 10°C/min to 35°C/min;
heating and holding the clad steel-welded steel pipe within a range of 950°C to 990°C as a second stage austenitization;
in a cooling step after the second stage austenitization, performing quenching by cooling with the average cooling rate within a range of 500°C/min to 1500°C/min at 700°C to 500°C; and then
performing tempering at 500°C to 650°C that is equal to or lower than an AC1 temperature.

2. A clad steel-welded steel pipe comprising an annular clad steel sheet that is obtained by combining a cladding metal with a base metal as C-Mn steel,
wherein the C-Mn steel has a composition which contains, in mass%, C: 0.04% to 0.10%, Si: 0.10% to 0.30%, Mn: 1.30% to 1.80%, Ni: 0.10% to 0.50%, Cr: 0.01% to 0.10%, Mo: 0.05% to 0.40%, V: 0.02% to 0.06%, Nb: 0.01% to 0.04%, Ti: 0.005% to 0.025%, Al: 0.015% to 0.050%, and N: 0.0030% to 0.0100%, and in which a mass ratio of Ti content to N content is within a range of 1.5 to 4.0, and the balance is composed of Fe and inevitable impurities, and
wherein the C-Mn steel after the post-weld heat treatment has a tensile strength of 535 MPa or more and a 0.5% Y.S. of 450 MPa or more, and has minimum absorption energy at -80°C (Min.vE_{-80°C}) of 300 J or more in a Charpy impact test, a fracture appearance transition temperature (FATT) of -80°C or lower, and minimum absorption energy at -40°C (Min.vE_{-40°C}) of 150 J or more in a Charpy impact test for a test piece sampled from a weld heat-affected zone.

3. The clad steel-welded steel pipe according to claim 2, wherein a weld metal in the C-Mn steel has an average EBSD grain size of 14 µm or less and a maximum EBSD grain size of 70 µm or less when misorientation between adjacent crystals is 15° or more.

4. The clad steel-welded steel pipe according to claim 2 or 3, wherein the weld metal in the C-Mn steel has a composition which contains, in mass%, C: 0.04% to 0.14%, Si: 0.10% to 0.50%, Mn: 1.30% to 1.80%, Ni: 0.01% to 0.50%, Cr: 0.01% to 0.10%, Mo: 0.01% to 0.40%, Ti: 0.005% to 0.040%, N: 0.0020% to 0.0100%, and in which the balance is composed of Fe and inevitable impurities, and the inevitable impurities are defined as, in mass%, P: 0.02% or less, S: 0.015% or less, Cu: 0.25% or less, V: 0.02% or less, Al: 0.02% or less, Nb: 0.02% or less, and the weld metal after the post-weld heat treatment has a material property in which tensile strength is 535 MPa or more and 0.5% YS. is 450 MPa or more, and has a performance in which minimum absorption energy at -40°C (Min.vE_{-40°C}) is 130J or more in the Charpy impact test.

5. The clad steel-welded steel pipe according to claim 4, wherein the weld metal contains B: 0.001% to 0.003% as a component.
